# EUROPEAN PATENT SPECIFICATION

(11) **EP 2 951 874 B1**
(45) Date of publication and mention of the grant of the patent: **16.08.2017**
(21) Application number: 13874024.6
(22) Date of filing: 12.12.2013
(51) Int. Cl.: H01M 4/58, H01M 10/054, H01M 10/0566, C01C 3/12, H01M 4/1397, H01M 4/136

(54) **METHOD FOR SYNTHESIZING A TRANSITION METAL HEXACYANOFERRATE BATTERY MATERIAL**
VERFAHREN ZUR HERSTELLUNG EINES MATERIALS FÜR EINE ÜBERGANGSMETALL-HEXACYANOFERRAT-BATTERIE
PROCÉDÉ DE SYNTHÈSE D'UN MATÉRIEL DE BATTERIE D'HEXACYANOFERRATE DE MÉTAL DE TRANSITION

(30) Priority: 29.01.2013 US 201313752930
(43) Date of publication of application: 09.12.2015
(73) Proprietor: Sharp Kabushiki Kaisha, Osaka-shi, Osaka 545-8522 (JP)
(72) Inventor: LU, Yuhao, Camas, Washington 98607 (US); KISDARJONO, Hidayat, Camas Washington 98607 (US); LEE, Jong-Jan, Camas Washington 98607 (US); EVANS, David, Camas Washington 98607 (US)
(74) Representative: Müller Hoffmann & Partner
(86) International application number: PCT/JP2013/007323
(87) International publication number: WO 2014/118854

(56) References cited:
- EP-A1- 0 131 392
- WO-A1-2012/127790
- JP-A- 2012 046 399
- JP-A- 2013 152 869
- US-A1- 2012 328 936
- US-A1- 2013 257 378
- US-A1- 2015 266 745
- LONG WANG ET AL: "A Superior Low-Cost Cathode for a Na-Ion Battery", ANGEWANDTE CHEMIE INTERNATIONAL EDITION, vol. 52, no. 7, 14 January 2013 (2013-01-14), pages 1964-1967, XP055216608, ISSN: 1433-7851, DOI: 10.1002/anie.201206854
- LU YUHAO ET AL.: 'Prussian blue: a new framework of electrode materials for sodium batteries' CHEM COMMUN vol. 48, no. 52, 04 July 2012, pages 6544 - 6546, XP055216599
- COLIN D. WESSELLS ET AL.: 'The Effect of Insertion Species on Nanostructured Open Framework Hexacyanoferrate Battery Electrodes' JOURNAL OF THE ELECTROCHEMICAL SOCIETY vol. 159, no. 2, 2012, pages A98 - A103, XP055092040
- LONG WANG ET AL.: 'A Superior Low-Cost Cathode for a Na-Ion Battery' ANGEWANDTE CHEMIE . INTERNATIONAL EDITION vol. 52, no. 7, 14 January 2013, pages 1964 - 1967, XP055216608

## Description

### Technical Field

This invention generally relates to electrochemical cells and, more particularly, to a transition-metal hexacyanoferrate (TMH) cathode battery and associated fabrication processes.

### Background Art

A battery is an electrochemical cell through which chemical energy and electric energy can be converted back and forth. The energy density of a battery is determined by its voltage and charge capacity. Lithium has the most negative potential of -3.04 V vs. H₂/H⁺, and has the highest gravimetric capacity of 3860 milliamp-hours per gram (mAh/g). Due to their high energy densities, lithium-ion batteries have led the portable electronics revolution. However, the high cost of lithium metal renders doubtful the commercialization of lithium batteries as large scale energy storage devices. Further, the demand for lithium and its reserve as a mineral have raised the need to build other types metal-ion batteries as an alternative.

Lithium-ion (Li-ion) batteries employ lithium storage compounds as the positive (cathode) and negative (anode) electrode materials. As a battery is cycled, lithium ions (Li⁺) are exchanged between the positive and negative electrodes. Li-ion batteries have been referred to as rocking chair batteries because the lithium ions "rock" back and forth between the positive and negative electrodes as the cells are charged and discharged. The positive electrode (cathode) material is typically a metal oxide with a layered structure, such as lithium cobalt oxide (LiCoO₂), or a material having a tunneled structure, such as lithium manganese oxide (LiMn₂O₄), on an aluminum current collector. The negative electrode (anode) material is typically a graphitic carbon, also a layered material, on a copper current collector. In the charge-discharge process, lithium ions are inserted into, or extracted from interstitial spaces of the active materials.

Similar to the lithium-ion batteries, metal-ion batteries use the metal-ion host compounds as their electrode materials in which metal-ions can move easily and reversibly. As for a Li⁺-ion, it has one of the smallest radii of all metal ions and is compatible with the interstitial spaces of many materials, such as the layered LiCoO₂, olivine-structured LiFePO₄, spinel-structured LiMn₂O₄, and so on. Other metal ions, such as Na⁺, K⁺, Mg²⁺, Al³⁺, Zn²⁺, etc., with large sizes, severely distort Li-based intercalation compounds and ruin their structures in several charge/discharge cycles. Therefore, new materials with large interstitial spaces would have to be used to host such metal-ions in a metal-ion battery.

Transition-metal hexacyanoferrates (TMHs) have been investigated as the cathode materials in lithium-ion batteries (LIBs) [1,2] because they accommodate lithium-ion intercalation in their interstitial spaces. However, the lithium-ion size is too small to match the spaces, which degrades the TMH capacities rapidly during lithium-ion intercalation. In 2004, Eftekhari [3] used iron hexacyanoferrate (Prussian blue) as the cathode material in potassium-ion batteries (KIBs) with a counter electrode of potassium metal. The organic electrolyte was 1M KBF₄ in 3:7 ethylene carbonate/ ethylmethyl carbonate (wt.). The size of potassium-ion is almost two times that of the lithium-ions, and matches the interstitial spaces of Prussian blue very well. The results showed that Prussian blue was a good electrode material for KIBs, demonstrating a reversible capacity of ca. 75 mAh/g and a good capacity retention.

Similarly, Cui's group studied the intercalation behavior of large ions, for example, sodium, potassium and ammonium ions, in copper (CuHCF) and nickel hexacyanoferrates (NiHCF) with an aqueous electrolyte [4-6]. These large size ions were compatible with the interstitial spaces of the hexacyanoferrates, so that CuHCF and NiHCF demonstrated good capacity retention. Due to the narrow electrochemical window of water, these materials were evaluated under low voltages and demonstrated low energy density. In order to improve the performance, organic electrolytes with a wide electrochemical window would have to be used to increase the operation voltages of the TMH electrodes.

Goodenough's group [7] investigated a series of Prussian blue analogues in sodium-ion batteries (SIBs) with organic electrolytes. They found that KFe(II)Fe(III)(CN)₆ demonstrated the highest capacity of 95 mAh/g, and KMnFe(CN)₆, KNiFe(CN)₆, KCuFe(CN)₆, and KCoFe(CN)₆ had a capacity of 50 ∼ 70 mAh/g. In the first 20 cycles, the capacity retention of KFeFe(CN)₆ was higher than 97%.

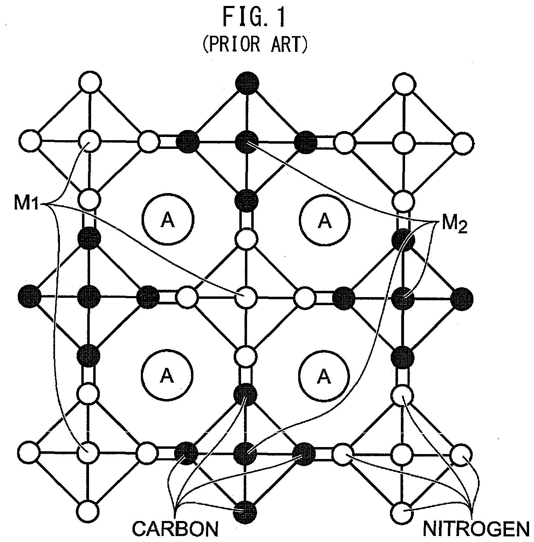

Fig. 1 is a diagram depicting the crystal structure of a transition-metal hexacyanoferrate (TMH) in the form of AₓM1M2(CN)₆ (prior art). TMHs have an open framework. The large tetrahedrally coordinated A sites can host alkali, alkaline ions (A ₓ), and H₂O molecules. The number of alkali or alkaline ions in the large cages of this crystallographically porous framework may vary from x = 0 to x = 2, depending on the valence of M1 and M2 that are metal ions. Of course, as the electrode materials in SIBs or KIBs, TMHs are expected to have two of Na⁺- or K⁺-ions in their interstitial spaces. Therefore, M1 and M2 with valences of +2 are selected in the synthesis process to produce (Na,K)₂M1M2(CN)₆. Moreover, M1 and M2 can be reversibly oxidized and reduced between the valences of +2 and +3 when Na⁺- or K⁺-ions are extracted/ inserted from/into TMHs. When these TMHs are used as the electrode materials in SIBs or KIBs, it is hard to obtain very smooth and flat charge/discharge curves due to the fact that M1 and M2 have different chemical potentials, or occupy different spin states. For example, Na₂CoFe(CN)₆ exhibited two plateaus in its discharge curves at 3.78 V and 3.28 V vs. Na/Na⁺, that correspond to the reduction of Co³⁺ and Fe³⁺, respectively [8].

In order to obtain cheap electrode materials for batteries, manganese is a good choice for TMHs, e.g., (Na,K)ₓMn[Fe(CN)₆]_{y}·zH₂O. Matsuda and Moritomo [9] synthesized a Na_{1.32}Mn[Fe(CN)₆]·3.5H₂O film for a lithium-ion battery that showed three plateaus in its discharge curve, and two plateaus in its charge curve that could be explained by the reduction and oxidation of Mn and Fe in the material. In the battery, the materials showed a capacity of 128 mAh/g. In a sodium-ion battery, Goodenough's group [7] also reported multiple plateaus in its charge/discharge curves. The Mn-based TMHs demonstrated a capacity of 70 mAh/g. However, it would be better to have a single, rather than two voltage plateaus in the charge/discharge curves. A battery with a single plateau charge/discharge curve has a tighter (more uniform) charge/discharge voltage than a battery with multiple plateaus. A tighter charge/discharge voltage renders a simpler battery control.

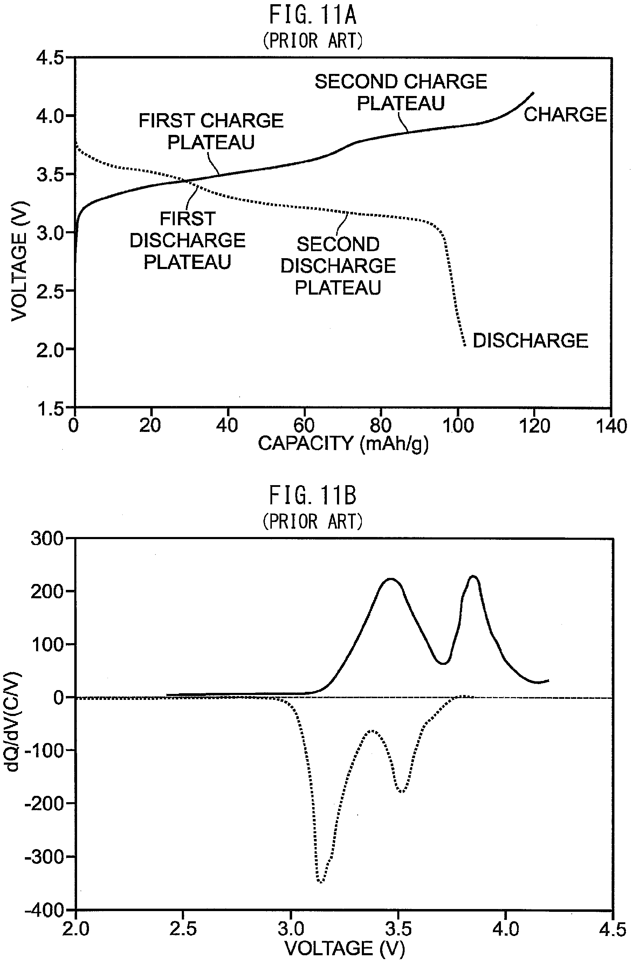

Figs. 11A and 11B are graphs depicting the electrochemical behavior of a synthesized NaₓMn[Fe(CN)₆]_{y·}zH₂O cathode in sodium-ion batteries (prior art). When sodium ions electrochemically move in and out of the interstitial space of magnesium hexacyanoferrate (MnHCF), two main potentials appear in the charge or discharge process, due to the redox reaction of Mn and Fe [7, 9] in MnHCF. In battery applications, the redox reaction of MnHCF causes two plateaus during charge/discharge. Two plateaus are observed during charge/discharge that correspond to the redox reaction of Mn at higher voltages and the redox reaction of Fe at low voltages.

It would be advantageous if a TMH cathode battery could be made to operate with a single plateau charge and discharge curve.

JP 2012 046399 A relates to a Prussian-blue analogue represented by the formula KₓM¹_{y}[M²(CN)₆]nH₂O.

Long Wang et al. (Angewandte Chemie International Edition (2013) pages 1964 - 1967) relates to a superior low-cost cathode for a Na-ion battery wherein rhombohedral Na_{1.72}MnFe(CN)₆ is mentioned.

US 2012/0328936 teaches a battery including an anode and a cathode wherein at least one of the cathode and at the anode includes an electrode material having a open framework crystal structure into which the cation A is reversibly inserted during operation of the battery.

EP 0 131 392 Al relates to a cathode containing as an electrochemically active material an oxidation product of a polynuclear metal cyanide complex of the general formula M^{A}[M^{B}(CN)₆]I·xH₂O.

US 2015/0266745 Al teaches a method for synthesizing metal cyanometallate, wherein a solution of A_{X}M1_{Y}(CN)_{Z} is provided, where "A" is selected from a first group of metals and M1 is selected from a second group of metals.

### Non Patent Literature

NPL 1: [1] V.D. Neff, Some performance characteristics of a Prussian Blue battery, Journal of Electrochemical Society, 132 (1985) 1382-1384.
NPL 2: [2] N. Imanishi, T. Morikawa, J. Kondo, Y. Takeda, O.Yamamoto, N. Kinugasa, T. Yamagishi, Lithium intercalation behavior into iron cyanide complex as positive electrode of lithium secondary battery, Journal of Power Sources, 79 (1999) 215-219.
NPL 3: [3] Ali Eftekhari, Potassium secondary cell based on Prussian blue cathode, Journal of Power Sources, 126 (2004) 221-228.
NPL 4: [4] Colin D. Wessells, Rober A. Huggins, Yi Cui, Copper hexacyanoferrate battery electrodes with long cycle life and high power, Nature Communication, 2( 2011) 550.
NPL 5: [5] Colin D. Wessells, Sandeep V. Peddada, Robert A. Huggins, Yi Cui, Nickel hexacyanoferrate nanoparticle electrodes for aqueous sodium and potassium ion batteries. Nano Letters, 11(2011) 5421-5425.
NPL 6: [6] Colin D. Wessells, Sandeep V. Peddada, M.T. McDowell, Robert A. Huggins, Yi Cui, The effect of insertion species on nanostructured open framework hexacyanoferrate battery electrodes, Journal of Electrochemical Society, 159 (2012) A98-A103.
NPL 7: [7] Yuhao Lu, Long Wang, John B. Goodenough, Prussian blue: a new framework for sodium batteries, Chemistry Communication, 48(2012)6544-6546.
NPL 8: [8] J.F. Qian, M. Zou, Y.L. Cao, H.X. Yang, NaxMyFe(CN)6 (M=Fe, Co, Ni): A New class of cathode Materials for sodium Ion batteries, Journal of Electrochemistry (Chinese), 18(2012)108-112.
NPL 9: [9] T. Matsuda, Y. Moritomo, Thin film electrode of Prussian blue analogue for Li-ion battery, Applied Physics Express, 4(2011)047101.

### Summary of Invention

According to the present invention there is provided a method for synthesizing a transition metal hexacyanoferrate (THM) battery material according to claim 1.

### Brief Description of Drawings

[fig.1]Fig. 1 is a diagram depicting the crystal structure of a transition-metal hexacyanoferrate (TMH) in the form of AₓM1M2(CN)₆ (prior art).
[fig.2A]Fig. 2A is a diagram depicting an AₓMnFe(CN)₆ crystal structure, as an example of a TMH battery cathode material.
[fig.2B]Fig. 2B is a diagram depicting a rhombohedral crystal structure.
[fig.3]Fig. 3 is a partial cross-sectional view of a TMH cathode battery.
[fig.4]Fig. 4 is a diagram depicting charging and discharging curves associated with the battery of Fig. 3.
[fig.5A]Fig. 5A is a X-ray diffraction (XRD) pattern contrasting, (Na,K)ₓMn[Fe(CN)₆]_{y} ·zH₂O dried in air, with vacuum drying.
[fig.5B]Fig. 5B is a X-ray diffraction (XRD) pattern contrasting, (Na,K)ₓMn[Fe(CN)₆]_{y} ·zH₂O dried in air, with vacuum drying.
[fig.6A]Fig. 6A is a graph contrasting the electrochemical behavior of NaₓMn[Fe(CN)₆ ]_{y}·zH₂O dried in different conditions.
[fig.6B]Fig. 6B is a graph contrasting the electrochemical behavior of NaₓMn[Fe(CN)₆ ]_{y}·zH₂O dried in different conditions.
[fig.7A]Fig. 7A depict the charge/discharge profile of the composite of graphene oxide (or graphene) and NaₓMn[Fe(CN)₆]_{y}·zH₂O, and a chronoamperogram of the composite of graphene oxide (or graphene) and NaₓMn[Fe(CN)₆]_{y}·zH₂O at the second cycle.
[fig.7B]Fig. 7B depict the charge/discharge profile of the composite of graphene oxide (or graphene) and NaₓMn[Fe(CN)₆]_{y}·zH₂O, and a chronoamperogram of the composite of graphene oxide (or graphene) and NaₓMn[Fe(CN)₆]_{y}·zH₂O at the second cycle.
[fig.8]Fig. 8 is a flowchart illustrating a method for synthesizing a TMH battery material.
[fig.9]Fig. 9 is a flowchart illustrating a method for fabricating a TMH battery cathode electrode.
[fig.10]Fig. 10 is a flowchart illustrating a method for using a TMH battery.
[fig.11A]Fig. 11A is a graph depicting the electrochemical behavior of a synthesized NaₓMn[Fe(CN)₆]_{y·}zH₂O cathode in sodium-ion batteries (prior art).
[fig.11B]Fig. 11B is a graph depicting the electrochemical behavior of a synthesized NaₓMn[Fe(CN)₆]_{y}·zH₂O cathode in sodium-ion batteries (prior art).

### Description of Embodiments

This application is a Continuation-in-Part of an application entitled, SUPER-CAPACITOR WITH HEXACYANOMETALLATE CATHODE, ACTIVATED CARBON ANODE, AND AQUEOUS ELECTROLYTE, invented by Yuhao Lu et al., Serial No. 13/603,322, filed September 4, 2012, attorney docket No. SLA3212;

This application is a Continuation-in-Part of an application entitled, IMPROVEMENT OF ELECTRON TRANSPORT IN HEXACYANOMETALLATE ELECTRODE FOR ELECTROCHEMICAL APPLICATIONS, invented by Yuhao Lu et al., Serial No. 13/523,694, filed June 14, 2012, attorney docket No. SLA3152;
which is a Continuation-in-Part of a pending application entitled, ALKALI AND ALKALINE-EARTH ION BATTERIES WITH HEXACYANOMETALLATE CATHODE AND NON-METAL ANODE, invented by Yuhao Lu et al., Serial No. 13/449,195, filed April 17, 2012, attorney docket no. SLA3151;
which is a Continuation-in-Part of a pending application entitled, ELECTRODE FORMING PROCESS FOR METAL-ION BATTERY WITH HEXACYANOMETALLATE ELECTRODE, invented by Yuhao Lu et al., Serial No. 13/432,993, filed March 28, 2012, attorney docket no. SLA3146.

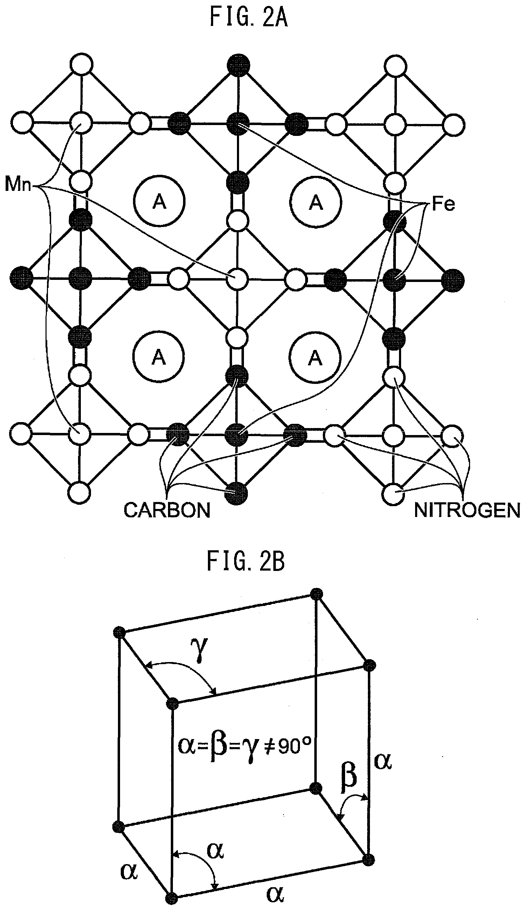

Fig. 2A is a diagram depicting an AₓMnFe(CN)₆ crystal structure, as an example of a TMH battery cathode material. The cathode comprises AₓMn[Fe(CN)₆]_{y}·zH₂O;
where A cations are alkali or alkaline-earth cations;
where x is in the range of 1 to 2;
where y is in the range of 0.5 to 1; and,
where z is in the range of 0 to 3.5.

The AₓMn[Fe(CN)₆]_{y}·zH₂O has a rhombohedral crystal structure with Mn^{2+/3+} and Fe ^{2+/3+} having the same reduction/oxidation potential. In one aspect, the A cations may be either sodium (Na) or potassium (K).

Note that, the description "Mn^{2+/3+} and Fe^{2+/3+} having the same reduction/oxidation potential" means that the Mn ion and the Fe ion in the AₓMn[Fe(CN)₆]_{y}·zH₂O are such ions that are oxidized or reduced in the same manner at electrical potential application. That is, in a case of oxidization, for example, electrical potential application with which Mn²⁺ ions are oxidized to Mn³⁺ also oxidizes Fe²⁺-ions to Fe³⁺. On the other hand, in a case of reduction, for example, electrical potential application with which Mn³⁺ ions are reduced to Mn²⁺ also reduces Fe³⁺ ions to Fe²⁺.

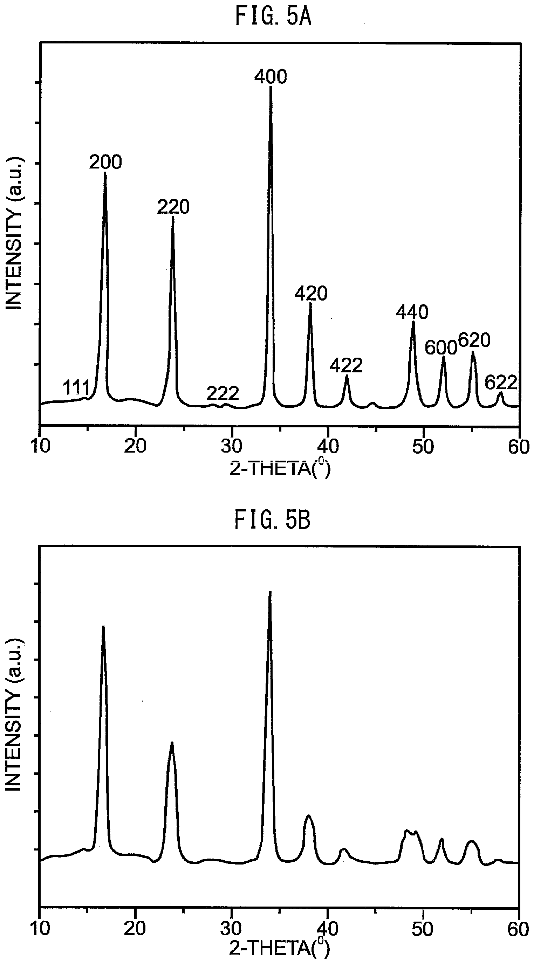

Fig. 2B is a diagram depicting a rhombohedral crystal structure. This structure is just a little bit "twisted" from a cubic crystal structure (alpha = beta = gamma = 90 degrees). Although the rhombohedral crystal structure cannot physically be seen under a microscope, it can be detected using X-ray diffraction, see Figs. 5A and 5B.

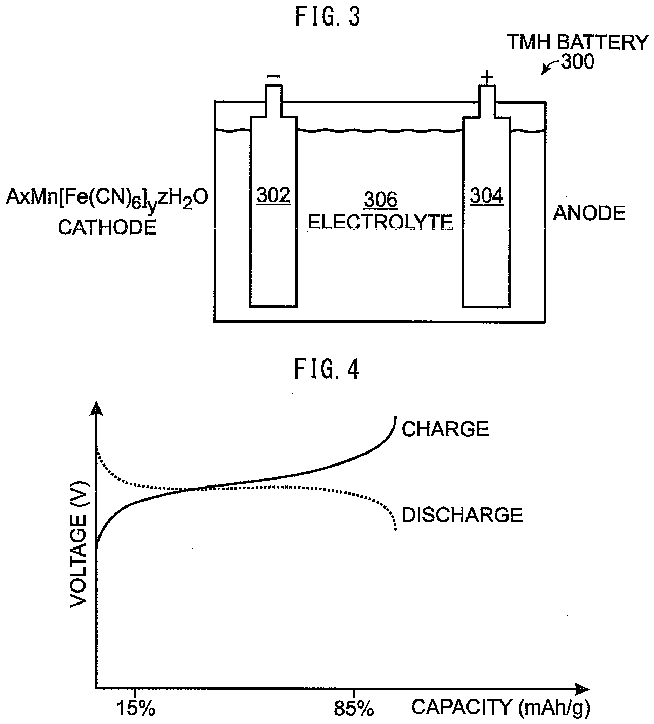

Fig. 3 is a partial cross-sectional view of a TMH cathode battery. The battery 300 comprises a AₓMn[Fe(CN)₆]_{y}·zH₂O cathode 302, where A cations are either alkali or alkaline-earth cations, where x is in the range of 1 to 2, where y is in the range of 0.5 to 1, and where z is in the range of 0 to 3.5, see Fig. 2A. The AₓMn[Fe(CN)₆]_{y}·zH₂O has a rhombohedral crystal structure, with Mn^{2+/3+} and Fe^{2+/3+} having the same reduction/ oxidation potential. The battery 300 has an anode 304 made from an A metal, an A composite, or a material that can host A atoms. The battery 300 further comprises an electrolyte 306. The electrolyte may, for example, be an organic solvent containing A-atom salts. In one aspect, A is either Na or K.

Fig. 4 is a diagram depicting charging and discharging curves associated with the battery of Fig. 3. As shown, the battery has a single plateau charging curve, where a single plateau charging curve is defined as a constant charging voltage slope between 15% and 85% battery charge capacity. Likewise, the battery has a single plateau discharge curve, where a single plateau discharge curve is defined as a constant discharge voltage slope between 85% and 15% battery charge capacity. It should be understood that the 15% and 85% battery charge capacity values may vary depending upon a particular design, and that in some instances, the range may extend to less than 15% battery charge capacity, and/or greater than 85%. Alternatively stated, the battery has a single plateau charging/discharging curve, where a single plateau charging/ discharging curve is defined by the derivative of charge capacity to voltage (dQ/dV) of a completed charging/discharging curve having only one peak. In one aspect, the above-mentioned single plateau curves are associated with a battery having a discharge capacity of greater than 90 milliamp hours per gram (mAh/g). Alternatively stated, when there are two A atoms in a lattice (x = 2), and all TMH materials are active (meaning they can charge and discharge), the discharge capacity associated with the first A atom is 90 mAh/g capacity. The discharge of the second A atom in the lattice increases the capacity to a value greater than 90 mAh/g.

As explained above, sodium or potassium (Na,K)ₓ Mn[Fe(CN)₆]_{y}·zH₂O can be fabricated for sodium-ion batteries (SIBs) or potassium-ion batteries (KIBs) that demonstrate a single plateau during charge/discharge. In addition, these batteries have a high capacity. The preparation described herein (1) increases the value of x in (Na,K) ₓMn[Fe(CN)₆]_{y}·zH₂O to obtain high capacity; (2) reduces the value of z in (Na,K)ₓ Mn[Fe(CN)₆]_{y}zH₂O; and, (3) enhances the electronic conductivity of (Na,K)ₓ Mn[Fe(CN)₆]_{y}·zH₂O.

Precipitation is a simple method to synthesize (Na,K)ₓMn[Fe(CN)₆]_{y}·zH₂O. A Mn²⁺ solution and a Fe(CN)₆⁴⁻ solution are mixed, and (Na,K)ₓMn[Fe(CN)₆]_{y}·zH₂O precipitates immediately. When the process is exposed to air, it is inevitable that Mn²⁺- or Fe²⁺-ions are oxidized to Mn³⁺ or Fe³⁺. The oxidation reduces the content of Na⁺ or K⁺ in the final product of (Na,K)ₓMn[Fe(CN)₆]_{y}·zH₂O because all charges should be neutralized in the material. As electrode materials, the small content of Na⁺ or K⁺ means a small capacity of (Na,K)ₓMn[Fe(CN)₆]_{y}·zH₂O for SIBs or KIBs. In order to prevent the oxidation in the synthesis, reductive agents can be added into both the Mn²⁺ solution, the Fe(CN)₆⁴⁻ solution, or both, at the beginning of the process. The reductive agents may, for example, be sodium borohydride (NaBH₄) and hydrazine (N₂H₄), but other agents would be apparent to those with skill in the art. In the solution of Mn²⁺, the concentration of reductive agents is from 0 to 100 moles/liter. In the solution of Fe(CN)₆⁴⁻, the concentration of reductive agents is from 0 to 100 in moles/liter. After the reaction finishes, the precipitate is collected and washed to obtain (Na,K)ₓMn[Fe(CN)₆]_{y}·zH₂O.

Figs. 5A and 5B are X-ray diffraction (XRD) patterns contrasting, respectively, (Na,K)ₓMn[Fe(CN)₆]_{y}·zH₂O dried in air, with vacuum drying. The XRD pattern of Fig. 5A is associated with a cubic crystal structure and the XRD pattern of Fig. 5B is associated with a rhombohedral crystal pattern. (Na,K)ₓMn[Fe(CN)₆]_{y}·zH₂O can be dried in either air or in a vacuum. The crystal structure and performance of the (Na,K)ₓ Mn[Fe(CN)₆]_{y}·zH₂O is highly dependent upon drying condition. NaₓMn[Fe(CN)₆]_{y}·zH₂ O dried in air (Fig. 5A) has a cubic structure, but it shows a structure change to a rhombohedral phase after being dried in a vacuum with a pressure of less than 0.1 torr (Fig. 5B).

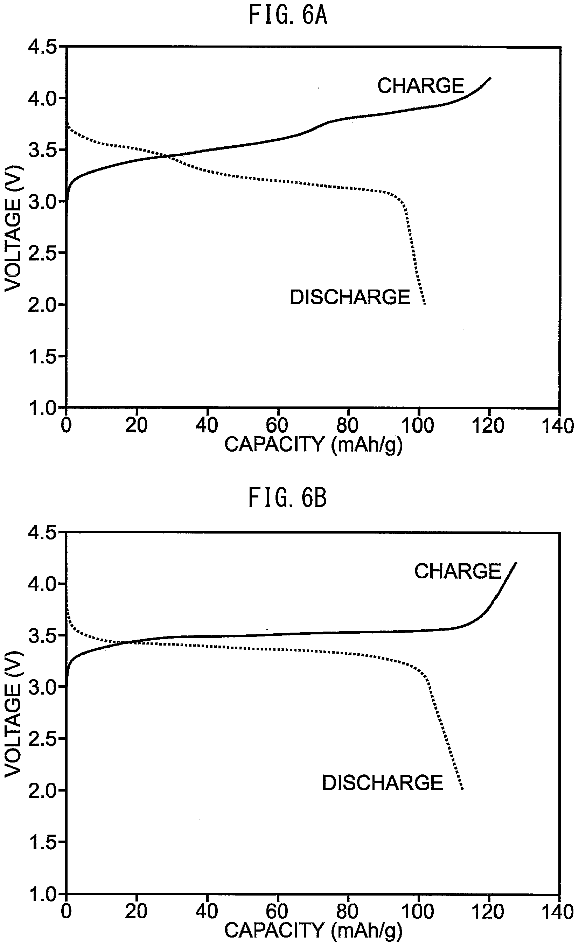

Figs. 6A and 6B are graphs contrasting the electrochemical behavior of Naₓ Mn[Fe(CN)₆]_{y}·zH₂O dried in different conditions. A NaₓMn[Fe(CN)₆]_{y}·zH₂O cathode was evaluated in standard CR2032 coin cells that consisted of a sodium anode or hard carbon anode, separated by a Celgard polypropylene separator. The NaₓMn[Fe(CN)₆]_{y}· zH₂O electrode was made of NaₓMn[Fe(CN)₆]_{y}·zH₂O, carbon black (Super P), and polytetrafluoroethylene (PTFE) binder. The electrolyte was saturated NaClO₄ in 1:1 ethylene carbonate/diethyl carbonate (EC/DEC) (vol.:vol.). The charge/discharge currents were 0.1 C at 170 milliamp-hours per gram (mAh/g). All cells were cycled between 2 V and 4.2 V.

After being dried in air, the NaₓMn[Fe(CN)₆]_{y}·zH₂O shows two plateaus during charge and discharge (Fig. 6A). However, only one plateau is observed in the charge/ discharge curves after vacuum drying with a pressure of less than 0.1 torr (Fig. 6B). Moreover, the vacuum drying process increases the energy density and efficiency of NaₓMn[Fe(CN)₆]_{y}·zH₂O. The fact that a material with the same chemical formula of Na ₓMn[Fe(CN)₆]_{y}·zH₂O may demonstrate different crystal structures and different charge/ discharge profiles is a result of different drying conditions.

In order to improve the performance of (Na,K)ₓMn[Fe(CN)₆]_{y}·zH₂O in SIBs or KIBs further, manganese TMHs can be composited with electronic conductors. In the composite structure, small sized (Na,K)ₓMn[Fe(CN)₆]_{y}·zH₂O particles can be uniformly coated on the large surface area of the conductors, so that the electronic conductivity of the (Na,K)ₓMn[Fe(CN)₆]_{y}·zH₂O electrode is improved, and the utilization rate of the active (Na,K)ₓMn[Fe(CN)₆]_{y}·zH₂O material is improved. The high conductivity, uniform distribution of (Na,K)ₓMn[Fe(CN)₆]_{y}·zH₂O, and high utilization rate improves battery performance in terms of capacity and power. The electronic conductor may be metal powders, carbonaceous materials, and polymers, but is not limited to just these examples. With the vacuum drying process, a (Na,K)ₓMn[Fe(CN)₆]_{y}·zH₂O conductor composite structured electrode shows a single plateau during charge and discharge. Moreover, its capacity is improved significantly due to the higher utilization rate.

A composite of graphene and NaₓMn[Fe(CN)₆]_{y}·zH_{2O}, as an example, is also useful in processing. Graphene oxide is ultrasonically dispersed into distilled water. The graphene oxide solution can be put into the Mn²⁺ solution, the Fe(CN)₆⁴⁻ solution, or both. Using the precipitation method with reductive agent, the graphene oxide is graphene and a composite of graphene and NaₓMn[Fe(CN)₆]_{y}·zH₂O forms. After separation and washing, the composite is dried in an oven at a temperature between 20 degrees Celsius and 200 degrees Celsius. The final product is a composite Naₓ Mn[Fe(CN)₆]_{y}·zH2O/graphene powder. As the drying is in an vacuum oven with pressure less than 0.1 torr, the NaₓMn[Fe(CN)₆]_{y}·zH₂O has a rhombohedral crystal structure.

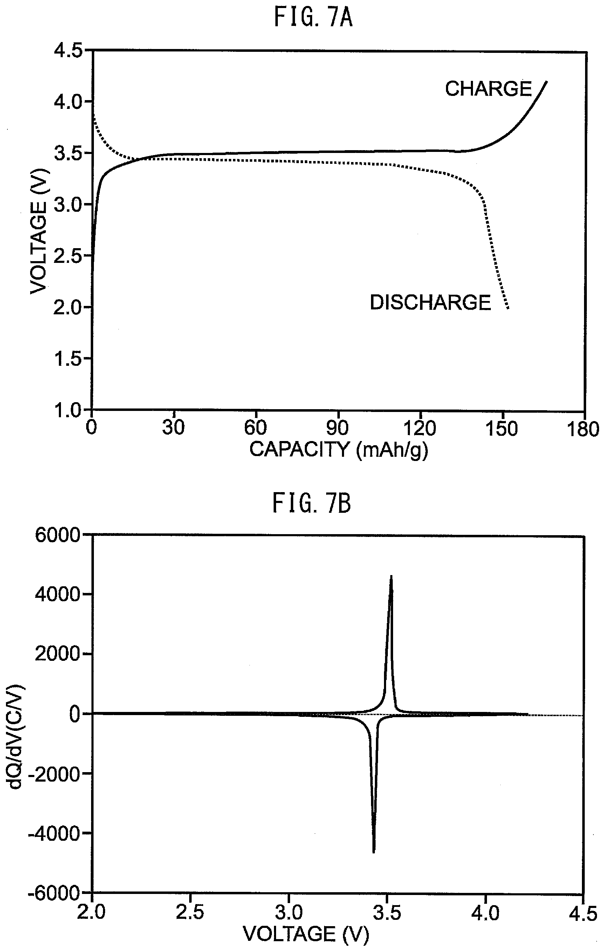

Figs. 7A and 7B respectively depict the charge/discharge profile of the composite of graphene oxide (or graphene) and NaₓMn[Fe(CN)₆]_{y}·zH₂O, and a chronoamperogram of the composite of graphene oxide (or graphene) and NaₓMn[Fe(CN)₆]_{y}·zH₂O at the second cycle. A vacuum drying process was applied to the composite NaₓMn[Fe(CN)₆] _{y}·zH₂O/graphene powder. The counter electrode is sodium metal and the organic electrolyte is saturated NaClO₄ in EC/DEC. Graphene oxide in the synthesis solution increases the capacity of NaₓMn[Fe(CN)₆]_{y}·zH₂O significantly. The vacuum drying process results in the NaₓMn[Fe(CN)₆]_{y}·zH₂O having single and very flat charge/ discharge curves (Fig. 7A), indicating that sodium-ion intercalation in the electrode is mostly likely a two-phase process, rather than the solid solution behavior shown in Fig. 6A. The electrode's chronoamperogram (Fig. 7B) also demonstrates the two-phase process with a single sharp peak during charge/discharge.

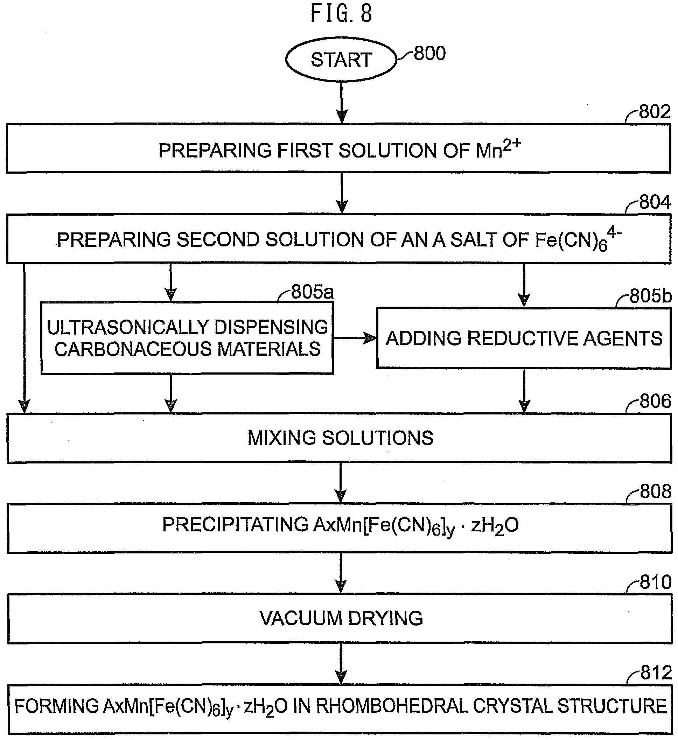

Fig. 8 is a flowchart illustrating a method for synthesizing a TMH battery material. Although the method is depicted as a sequence of numbered steps for clarity, the numbering does not necessarily dictate the order of the steps. It should be understood that some of these steps may be skipped, performed in parallel, or performed without the requirement of maintaining a strict order of sequence. Generally however, the method follows the numeric order of the depicted steps. The method starts at Step 800.

Step 802 prepares a first solution of Mn²⁺. Step 804 prepares a second solution of an A salt of Fe(CN)₆⁴⁻. Step 806 mixes the first and second solutions. In response to mixing the first and second solutions, AₓMn[Fe(CN)₆]_{y}·zH₂O is precipitated in Step 808. The A cations are alkali or alkaline-earth cations, such as Na or K. The variable x is in the range of 1 to 2, y is in the range of 0.5 to 1, and z is in the range of 0 to 3.5. Step 810 dries the precipitated AₓMn[Fe(CN)₆]_{y}·zH₂O in a vacuum oven with a pressure of less than 0.1 torr. In some aspect, the pressure is less than 0.01 torr. For example, the drying temperature may be in the range of 20 degrees Celsius to 200 degrees Celsius. In one aspect, Step 808 forms the AₓMn[Fe(CN)₆]_{y}·zH₂O in a cubic structure and Step 812 forms the AₓMn[Fe(CN)₆]_{y}·zH₂O with a rhombohedral crystal structure, with Mn2^{+/3+} and Fe^{2+/3+} having the same reduction/oxidation potential.

During the synthesis process, it is inevitable that water molecules occupy the large interstitial spaces of TMHs. Water molecules in TMHs cause the A ions to move from the center of the elementary cubes, which makes the A ions interact with the two transition-metal redox couples differently. That is, the A ions are located in two chemical environments. The charge/discharge, or extraction/insertion of A ions in two chemical environments correspond to the two charge/discharge plateaus seen in Fig. 11A. Under a vacuum with less than 0.1 torr pressure, water molecules are removed from the TMH interstitial spaces, permitting A ions go to the center of the cubes. All A ions then have a single, identical chemical environment, which causes just one plateau during charge/discharge. Further, the cubic structure of TMHs is changed to rhombohedral due to the water removal. It is still possible for rhombohedral TMHs to exhibit two plateaus during charge/discharge if the A ions do not occupy the center positions due to the water molecules in TMHs. However, the water removal from the crystal results in a phase transformation from cubic to rhombohedral, and also is the root cause of the one-plateau behavior of TMHs described herein. In other words, the use of higher vacuum pressure results in the more effective removal of water from the TMH crystal structure, and the single plateau charge/discharge curves.

In one aspect, prior to mixing the first and second solutions in Step 806, Step 805b adds reductive agents to the first solution, the second solution, or both the first and second solutions. Some exemplary reductive agents include sodium borohydride (NaBH₄), hydrazine (N₂H₄), and a combination of NaBH₄ and N₂H₄. For example, Step 805b may add the reductive agents to the first solution in a concentration in a range of 0 to 100 moles/liter. Likewise, the reductive agents may be added to the second solution in a concentration of 0 to 100 moles/liter.

In a different aspect, Step 805a ultrasonically disperses carbonaceous materials in distilled water, creating a third solution. Then, Step 806 additionally mixes the third solution with the first solution, second solution, or both the first and second solutions, and precipitating the AₓMn[Fe(CN)₆]_{y}·zH₂O in Step 808 includes precipitating a composite of carbonaceous materials and AₓMn[Fe(CN)₆]_{y}·zH₂O. Some examples of carbonaceous materials include graphene oxide, partially reduced graphene oxide, graphene, carbon black, and graphite. If the carbonaceous material used in Step 805a is graphene oxide, then Step 805b may be performed by adding a reducing agent such as NaBH₄, N₂H₄, or both NaBH₄ and N2H₄ to the mixture of the first, second, and third solutions.

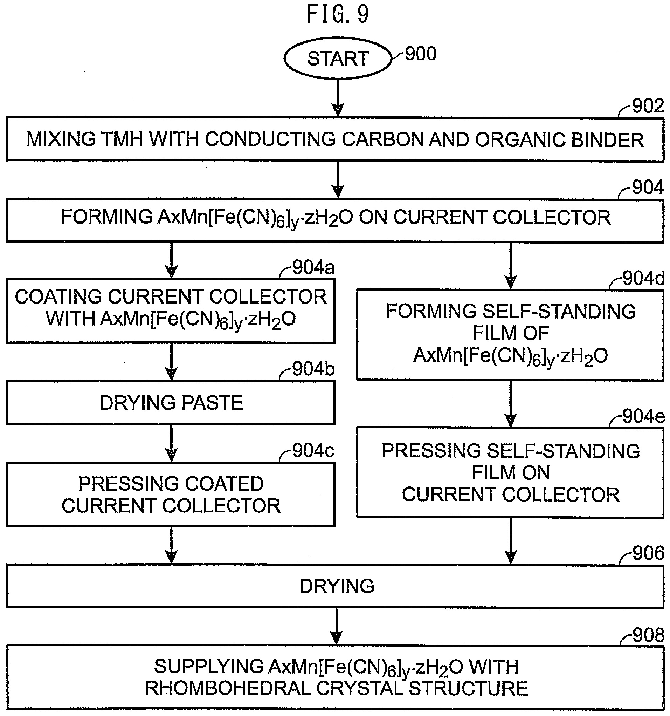

Fig. 9 is a flowchart illustrating a method for fabricating a TMH battery cathode electrode. The method begins at Step 900. Step 902 mixes TMH material with a conducting carbon and an organic binder in an organic solution, creating a Aₓ Mn[Fe(CN)₆]_{y}zH₂O paste. The A cations are alkali or alkaline-earth cations, such as Na and K. The variable x is in the range of 1 to 2, y is in the range of 0.5 to 1, and z is in the range of 0 to 3.5. Step 904 forms AₓMn[Fe(CN)₆]_{y}zH₂O material on a current collector to create an electrode. The current collector may, for example, be aluminum (Al), titanium (Ti), or stainless steel. Step 906 dries the electrode. Step 908 supplies the AₓMn[Fe(CN)₆]_{y}·zH₂O electrode with a rhombohedral crystal structure, with Mn^{2+/3+} and Fe^{2+/3+} having the same reduction/oxidation potential.

In one aspect, the TMH material used in Step 902 is the end product (Step 812) of the method described in Fig. 8, in which case TMH material has already been vacuum dried at a pressure of less than 0.1 torr. Alternatively, creating the AₓMn[Fe(CN)₆]_{y}·zH₂ O paste in Step 902 includes creating the AₓMn[Fe(CN)₆]_{y}·zH₂O paste in a cubic structure, and Step 906 dries the electrode in a vacuum oven at a pressure of less than 0.1 torr.

In one aspect, forming the AₓMn[Fe(CN)₆]_{y}·zH₂O material on the current collector in Step 904 includes substeps. Step 904a coats the current collector with the Aₓ Mn[Fe(CN)₆]_{y}·zH₂Opaste. Step 904b dries the AₓMn[Fe(CN)₆]_{y}·zH₂O paste, and Step 904c presses the coated current collector. After printing and drying (Steps 904a and 904b), the electrode is very porous due to solvent evaporation. The particles (TMH and conducting carbon) are bonded by organic binder. However, for a battery, the ideal porosity for electrode is smaller, but still large enough to permit the entry of the electrolyte into the electrode. The porosity is reduced by pressing is to compact the particles assembly.

In another aspect, forming the AₓMn[Fe(CN)₆]_{y}·zH₂O material on the current collector in Step 904 includes alternative substeps. Step 904d forms a self-standing film from the AₓMn[Fe(CN)₆]_{y}·zH₂O paste. Step 904e presses the self-standing film on the current collector.

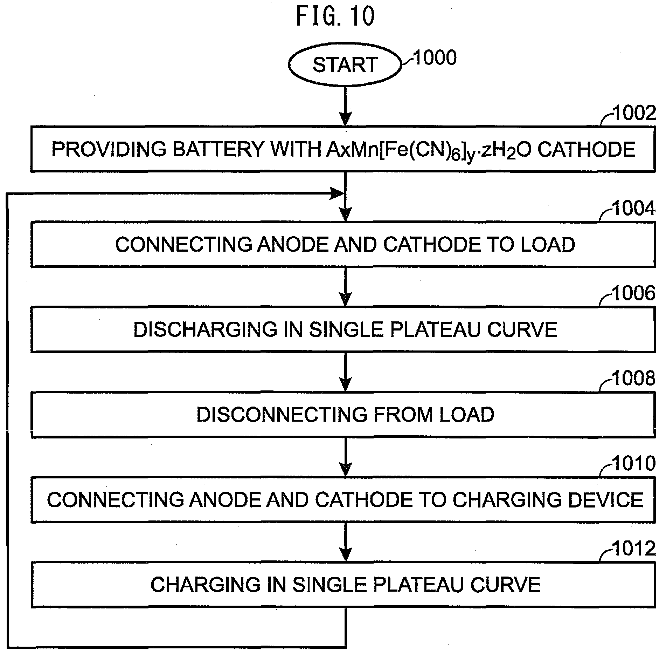

Fig. 10 is a flowchart illustrating a method for using a TMH battery. The method begins at Step 1000. Step 1002 provides a battery with an anode, an electrolyte, and a AₓMn[Fe(CN)₆]_{y}·zH₂O cathode. The A cations are alkali or alkaline-earth cations, such as Na or K. The variable x is in the range of 1 to 2, y is in the range of 0.5 to 1.0, and z is in the range of 0 to 3.5. The electrolyte may be an organic solvent containing an A-atom salt. Step 1004 connects a load between the cathode and the anode. Step 1006 discharges the battery in a single plateau discharge curve, where a single plateau discharge curve is defined as a constant discharge voltage slope between 85% and 15% battery charge capacity. Alternatively stated, in Step 1006 the single plateau discharging curve is defined by the derivative of charge capacity to voltage (dQ/dV) of a completed discharging curve having only one peak. In one aspect, Step 1006 discharges with a capacity of greater than 90 milliamp-hours per gram (mAh/g).

Subsequent to disconnecting the load in Step 1008, Step 1010 connects a battery charging device between the cathode and the anode. Step 1012 charges the battery in a single plateau charge curve, where a single plateau charge curve is defined as a constant charge voltage slope between 85% and 15% battery charge capacity. Alternatively stated, the single plateau charging curve is defined by the dQ/dV of a completed charging curve having only one peak. The battery can be iteratively charged and discharged. In one aspect not shown, the battery can be charged while still connected to a load.

Step 1002 provides the battery cathode AₓMn[Fe(CN)₆]_{y}·zH₂O having a rhombohedral crystal structure with Mn^{2+/3+} and Fe^{2+/3+} having the same reduction/ oxidation potential.

A transition metal hexacyanoferrate (TMH) battery fabrication is provided. Examples of particular materials and process steps have been presented to illustrate the invention. However, the invention is not limited to merely these examples. Other variations and embodiments of the invention will occur to those skilled in the art.

Disclosed herein are processes to prepare transition-metal hexacyanoferrate (TMH), such as (Na,K)ₓMn[Fe(CN)₆]_{y}·zH₂O for sodium-ion batteries (SIBs) or potassium-ion batteries (KIBs). Three factors are associated with the improved processes. Firstly, reductive agents may be added into the synthesis solution to protect Mn²⁺ and Fe²⁺ from oxidation, so that more Na⁺- or K⁺-ions can be kept in the interstitial spaces of (Na,K)ₓMn[Fe(CN)₆]_{y}·zH₂O. Secondly, the product may be vacuum-dried at a temperature range from 20 degrees Celsius to 200 degrees Celsius, regardless of whether it has been previously dried in air. Lastly, electronic conductors, for example, carbonaceous materials, can be dispersed into the reaction solution to improve performance of (Na,K)ₓMn[Fe(CN)₆]_{y}·zH₂O as electrode materials in SIBs or KIBs. The process can obtain (Na,K)ₓMn[Fe(CN)₆]_{y}·zH₂O with the following performance:
(1) Just single plateau appears the charge/discharge curves.
(2) The charge/discharge curves are smooth and flat.
(3) The material exhibits a high capacity, energy efficiency, and coulombic efficiency.

Accordingly, a TMH cathode battery is provided. The battery has a A_{X}Mn[Fe(CN)₆]_{y}· zH₂O cathode, where the A cations are alkali cations, where x is in the range of 1 to 2, where y is in the range of 0.5 to 1, and where z is in the range of 0 to 3.5. The AₓMn[Fe(CN)₆]_{y}·zH₂O has a rhombohedral crystal structure with Mn^{2+/3+} and Fe^{2+/3+} having the same reduction/oxidation potential. The battery also has an electrolyte, and an anode made of an A metal, an A composite, or a material that can host A atoms. The electrolyte may be an organic solvent containing an A-atom salt. In one aspect, A is either sodium (Na) or potassium (K).

The battery has a single plateau charging curve, where a single plateau charging curve is defined as a constant charging voltage slope between 15% and 85% battery charge capacity. Likewise, the battery has a single plateau discharge curve, where a single plateau discharge curve is defined as a constant discharge voltage slope between 85% and 15% battery charge capacity.

Additional details of the above-described battery, battery cathode, battery fabrication, and battery usage are described below.

According to the present invention, there is provide a method for synthesizing a transition metal hexacyanoferrate (TMH) battery material further comprising: prior to mixing the first and second solutions, adding reductive agents to a solution selected from a group consisting of the first solution, the second solution, and both the first and second solutions.

According to the present invention, there is provide a method for synthesizing a transition metal hexacyanoferrate (TMH) battery material wherein adding the reductive agents includes adding reductive agents selected from a group consisting of sodium borohydride (NaBH₄), hydrazine (N₂H₄), and a combination of NaBH₄ and N₂H₄.

According to the present invention, there is provide a method for synthesizing a transition metal hexacyanoferrate (TMH) battery material wherein adding the reductive agents includes adding the reductive agents to the first solution in a concentration in a range of 0 to 100 moles/liter.

According to the present invention, there is provide a method for synthesizing a transition metal hexacyanoferrate (TMH) battery material wherein adding the reductive agents includes adding the reductive agents to the second solution in a concentration of 0 to 100 moles/liter.

According to the present invention, there is provide a method for synthesizing a transition metal hexacyanoferrate (TMH) battery material further comprising: ultrasonically dispersing carbonaceous materials in distilled water, creating a third solution; wherein mixing the first and second solutions includes additionally mixing the third solution with a solution selected from a group consisting of the first solution, the second solution, and both the first and second solutions; and, wherein precipitating the AₓMn[Fe(CN)₆]_{y}·zH₂O includes precipitating a composite of carbonaceous materials and AₓMn[Fe(CN)₆]_{y}·zH₂O

According to the present invention, there is provide a method for synthesizing a transition metal hexacyanoferrate (TMH) battery material wherein the carbonaceous materials are selected from a group consisting of graphene oxide, partially reduced graphene oxide, graphene, carbon black, and graphite.

According to the present invention, there is provide a method for synthesizing a transition metal hexacyanoferrate (TMH) battery material wherein the carbonaceous material is graphene oxide; and, the method further comprising: adding a reducing agent selected from a group consisting of sodium borohydride (NaBH₄), hydrazine (N₂ H₄), and NaBH₄ and N₂H₄ to the mixture of the first, second, and third solutions.

According to the present invention, there is provide a method for synthesizing a transition metal hexacyanoferrate (TMH) battery material wherein the A cations are selected from a group consisting of sodium (Na) and potassium (K).

According to the present invention, there is provide a method for synthesizing a transition metal hexacyanoferrate (TMH) battery material wherein wherein drying the precipitated AₓMn[Fe(CN)₆]_{y}·zH₂O in the vacuum oven includes the drying temperature being in a range of 20 degrees Celsius to 200 degrees Celsius.

According to the present invention, there is provide a method for synthesizing a transition metal hexacyanoferrate (TMH) battery material wherein precipitating Aₓ Mn[Fe(CN)₆]_{y}·zH₂O includes forming the AₓMn[Fe(CN)₆]_{y}·zH₂O in a cubic structure.

According to the present invention, there is provide a method for fabricating a transition metal hexacyanoferrate (TMH) battery cathode electrode wherein forming the AₓMn[Fe(CN)₆]_{y}·zH₂O material on the current collector includes the current collector being selected from a group of material consisting of aluminum (Al), titanium (Ti), and stainless steel.

According to the present invention, there is provide a method for fabricating a transition metal hexacyanoferrate (TMH) battery cathode electrode wherein forming the AₓMn[Fe(CN)₆]_{y}·zH₂O material on the current collector includes: coating the current collector with the AₓMn[Fe(CN)₆]_{y}·zH₂O paste; drying the AₓMn[Fe(CN)₆]_{y}·zH₂O O paste; and, pressing the coated current collector.

According to the present invention, there is provide a method for fabricating a transition metal hexacyanoferrate (TMH) battery cathode electrode wherein forming the AₓMn[Fe(CN)₆]_{y}·zH₂O material on the current collector includes: forming a self-standing film from the AₓMn[Fe(CN)₆]_{y}·zH₂O paste; and, pressing the self-standing film on the current collector.

According to the present invention, there is provide a method for fabricating a transition metal hexacyanoferrate (TMH) battery cathode electrode wherein mixing TMH material with the conducting carbon and the organic binder in the organic solution includes creating the AₓMn[Fe(CN)₆]_{y}·zH₂O paste in a cubic structure; wherein drying the electrode includes drying the electrode in a vacuum oven with a pressure of less than 0.1 torr; and, wherein supplying the AₓMn[Fe(CN)₆]_{y}·zH₂O electrode with the rhombohedral crystal structure includes supplying the AₓMn[Fe(CN)₆]_{y}·zH₂O electrode with the rhombohedral crystal structure in response to the vacuum drying at a pressure of less than 0.1 torr.

According to the present invention, there is provide a method for fabricating a transition metal hexacyanoferrate (TMH) battery cathode electrode wherein mixing TMH material with the conducting carbon includes mixing a TMH material, vacuum dried at a pressure of less than 0.1 torr, with the conducting carbon; and, wherein supplying the AₓMn[Fe(CN)₆]_{y}·zH₂O electrode with the rhombohedral crystal structure includes supplying the AₓMn[Fe(CN)₆]_{y}·zH₂O electrode with the rhombohedral crystal structure in response to the TMH material being vacuum dried at a pressure of less than 0.1 torr.

According to the present invention, there is provide a method for using a transition metal hexacyanoferrate (TMH) battery wherein discharging the battery in a single plateau discharging curve includes the single plateau discharging curve being defined by a derivative of charge capacity to voltage (dQ/dV) of a completed discharging curve having only one peak.

According to the present invention, there is provide a method for using a transition metal hexacyanoferrate (TMH) battery wherein discharging the battery includes discharging with a capacity of greater than 90 milliamp hours per gram (mAh/g).

According to the present invention, there is provide a method for using a transition metal hexacyanoferrate (TMH) battery further comprising: subsequent to disconnecting the load, connecting a battery charging device between the cathode and the anode; and, charging the battery in a single plateau charge curve, where a single plateau charge curve is defined as a constant charge voltage slope between 85% and 15% battery charge capacity.

According to the present invention, there is provide a method for using a transition metal hexacyanoferrate (TMH) battery wherein charging the battery in a single plateau charging curve includes the single plateau charging curve being defined by a derivative of charge capacity to voltage (dQ/dV) of a completed charging curve having only one peak.

According to the present invention, there is provide a method for using a transition metal hexacyanoferrate (TMH) battery wherein providing the battery cathode includes the AₓMn[Fe(CN)₆]_{y}·zH₂O having a rhombohedral crystal structure with Mn^{2+/3+} and Fe ^{2+/3+} having the same reduction/oxidation potential.

According to the present invention, there is provide a method for using a transition metal hexacyanoferrate (TMH) battery wherein providing the battery includes providing an electrolyte is an organic solvent containing an A-atom salt.

According to the present invention, there is provide a method for using a transition metal hexacyanoferrate (TMH) battery wherein providing the battery includes A being selected from a group consisting of sodium (Na) and potassium (K).

## Claims

1. A method for synthesizing a transition metal hexacyanoferrate (TMH) battery material, the method comprising:
preparing a first solution of Mn²⁺;
preparing a second solution of an A salt of Fe(CN)₆⁴⁻;
mixing the first and second solutions;
in response to mixing the first and second solutions, precipitating AₓMn[Fe(CN)₆]_{y}·zH₂O;
where A cations are selected from a group consisting of alkali cations;
where x is in a range of 1 to 2;
where y is in a range of 0.5 to 1;
where z is in a range of 0 to 3.5;
drying the precipitated AₓMn[Fe(CN)₆]_{y}·zH₂O in a vacuum oven with a pressure of less than 0.1 torr wherein the AₓMn[Fe(CN)₆]_{y}·zH₂O is formed in a rhombohedral crystal structure, with Mn^{2+/3+} and Fe^{2+/3+} having the same reduction/oxidation potential;
wherein precipitating AₓMn[Fe(CN)₆]_{y}·zH₂O includes forming the AₓMn[Fe(CN)₆]_{y}·zH₂O in a cubic structure; and
wherein the drying of the precipitated AₓMn[Fe(CN)₆]_{y}·zH₂O in the vacuum oven with a pressure of less than 0.1 torr transforms a crystal structure of the AₓMn[Fe(CN)₆]_{y}·zH₂O from the cubic structure to the rhombohedral structure by the water removal.

2. The method of claim 1 further comprising:
prior to mixing the first and second solutions, adding reductive agents to a solution selected from a group consisting of the first solution, the second solution, and both the first and second solutions.

3. The method of claim 2 wherein adding the reductive agents includes adding reductive agents selected from a group consisting of sodium borohydride (NaBH₄), hydrazine (N₂H₄), and a combination of NaBH₄ and N₂H₄.

4. The method of claim 2 wherein adding the reductive agents includes adding the reductive agents to the first solution in a concentration in a range of 0 to 100 moles/liter.

5. The method of claim 2 wherein adding the reductive agents includes adding the reductive agents to the second solution in a concentration of 0 to 100 moles/liter.

6. The method of claim 2 further comprising:
ultrasonically dispersing carbonaceous materials in distilled water, creating a third solution;
wherein mixing the first and second solutions includes additionally mixing the third solution with a solution selected from a group consisting of the first solution, the second solution, and both the first and second solutions; and,
wherein precipitating the AₓMn[Fe(CN)₆]_{y}·zH₂O includes precipitating a composite of carbonaceous materials and AₓMn[Fe(CN)₆]_{y}·zH₂O.

7. The method of claim 6 wherein the carbonaceous materials are selected from a group consisting of graphene oxide, partially reduced graphene oxide, graphene, carbon black, and graphite.

8. The method of claim 7 wherein the carbonaceous material is graphene oxide; and,
the method further comprising:
adding a reducing agent selected from a group consisting of sodium borohydride (NaBH₄), hydrazine (N₂H₄), and NaBH₄ and N₂H₄ to the mixture of the first, second, and third solutions.

9. The method of claim 1 wherein the A cations are selected from a group consisting of sodium (Na) and potassium (K).

10. The method of claim 1 wherein drying the precipitated AₓMn[Fe(CN)₆]_{y}·zH₂O in the vacuum oven includes the drying temperature being in a range of 20 degrees Celsius to 200 degrees Celsius.

## Patentansprüche

1. Verfahren zum Synthetisieren eines Übergangsmetall-Hexacyanoferrat-(THM)-Batteriematerials, wobei das Verfahren umfasst:
Präparieren einer ersten Lösung von Mn²⁺;
Präparieren einer zweiten Lösung eines A-Salzes aus Fe(CN)₆⁴⁻;
Mischen der ersten und zweiten Lösung;
als Reaktion auf ein Mischen der ersten und zweiten Lösung, Ausfällen von AₓMn[Fe(CN)₆]_{y}·zH₂O;
wobei A-Kationen aus einer aus Alkali-Kationen bestehenden Gruppe ausgewählt werden;
wobei x in einem Bereich von 1 bis 2 liegt;
wobei y in einem Bereich von 0,5 bis 1 liegt;
wobei z in einem Bereich von 0 bis 3,5 liegt;
Trocknen des ausgefällten AₓMn[Fe(CN)₆]_{y}·zH₂O in einem Vakuumofen mit einem Druck von weniger als 0,1 Torr, wobei das AₓMn[Fe(CN)₆]_{y}·zH₂O in einer rhomboedrischen Kristallstruktur ausgebildet ist, wobei Mn^{2+/3+} und Fe^{2+/3+} das gleiche Reduktions- / Oxidationspotenzial aufweisen;
wobei ein Ausfällen von AₓMn[Fe(CN)₆]yzH₂O ein Ausbilden des AₓMn(Fe(CN)₆]_{y}zH₂O in einer kubischen Struktur einschließt; und
wobei das Trocknen des ausgefällten AₓMn[Fe(CN)₆]_{y}zH₂O im Vakuumofen mit einem Druck von weniger als 0,1 Torr eine Kristallstruktur des AₓMn[Fe(CN)₆]_{y}·zH₂O von der kubischen Struktur zur rhomboedrischen Struktur durch den Wasserentzug transformiert.

2. Verfahren nach Anspruch 1, ferner umfassend
vor einem Mischen der ersten und zweiten Lösung, Hinzufügen von Reduktionsmitteln zu einer Lösung, ausgewählt aus einer Gruppe, die aus der ersten Lösung, der zweiten Lösung und sowohl der ersten als auch zweiten Lösung besteht.

3. Verfahren nach Anspruch 2, wobei ein Hinzufügen der Reduktionsmittel ein Hinzufügen von Reduktionsmitteln einschließt, die aus einer Gruppe ausgewählt werden, die aus Natriumborhydrid (NaBH₄), Hydrazin (N₂H₄) und einer Kombination von NaBH₄ und N₂H₄ besteht.

4. Verfahren nach Anspruch 2, wobei ein Hinzufügen der Reduktionsmittel ein Hinzufügen der Reduktionsmittel zu der ersten Lösung in einer Konzentration in einem Bereich von 0 bis 100 Mol/Liter einschließt.

5. Verfahren nach Anspruch 2, wobei ein Hinzufügen der Reduktionsmittel ein Hinzufügen der Reduktionsmittel zu der zweiten Lösung in einer Konzentration von 0 bis 100 Mol/Liter einschließt.

6. Verfahren nach Anspruch 2, ferner umfassend:
mittels Ultraschall Auflösen kohlenstoffhaltiger Materialien in destilliertem Wasser, wobei eine dritte Lösung erzeugt wird;
wobei ein Mischen der ersten und zweiten Lösung ein zusätzliches Mischen der dritten Lösung mit einer Lösung, ausgewählt aus einer Gruppe, die aus der ersten Lösung, der zweiten Lösung und sowohl der ersten als auch zweiten Lösung besteht, einschließt; und
wobei ein Ausfällen von AₓMn[Fe(CN)₆]_{y}·zH₂O ein Ausfällen eines Verbundmaterials aus kohlenstoffhaltigen Materialien und AₓMn[Fe(CN)₆]_{y}·zH₂O einschließt.

7. Verfahren nach Anspruch 6, wobei die kohlenstoffhaltigen Materialien aus einer Gruppe ausgewählt werden, die aus Graphenoxid, teilweise reduziertem Graphenoxid, Graphen, Ruß und Graphit besteht.

8. Verfahren nach Anspruch 7, wobei das kohlenstoffhaltige Material Graphenoxid ist; und
das Verfahren ferner umfasst:
Hinzufügen eines Reduktionsmittels, das aus einer Gruppe ausgewählt wird, die aus Natriumborhydrid (NaBH₄), Hydrazin (N₂H₄) und sowohl NaBH₄ als auch N₂H₄ besteht, zu der Mischung der ersten, zweiten und dritten Lösung.

9. Verfahren nach Anspruch 1, wobei die A-Kationen aus einer aus Natrium (Na) und Kalium (K) bestehenden Gruppe ausgewählt werden.

10. Verfahren nach Anspruch 1, wobei ein Trocknen des ausgefällten AₓMn[Fe(CN)₆]_{y}·zH₂O im Vakuumofen beinhaltet, dass die Trocknungstemperatur in einem Bereich von 20 Grad Celsius bis 200 Grad Celsius liegt.

## Revendications

1. Procédé pour synthétiser un matériau de batterie à base d'hexacyanoferrate de métal de transition (TMH), le procédé comprenant :
la préparation d'une première solution de Mn²⁺ ;
la préparation d'une deuxième solution d'un sel A de Fe(CN)₆⁴⁻ ;
le mélange des première et deuxième solutions ;
en réponse au mélange des première et deuxième solutions, la précipitation de AₓMn[Fe(CN)₆]_{y}•zH₂O ;
où les cations A sont choisis dans l'ensemble constitué par les cations alcalins ;
où x est situé dans la plage allant de 1 à 2 ;
où y est situé dans la plage allant de 0,5 à 1 ;
où z est situé dans la plage allant de 0 à 3,5 ;
le séchage du AₓMn[Fe(CN)₆]_{y}•zH₂O précipité dans un four sous vide avec une pression inférieure à 0,1 Torr, où le AₓMn[Fe(CN)₆]_{y}•zH₂O est formé selon une structure cristalline rhomboédrique, où Mn^{2+/3+} et Fe^{2+/3+} ont le même potentiel d'oxydoréduction ;
dans lequel la précipitation de AₓMn[Fe(CN)₆]_{y}•zH₂O comprend la formation du AₓMn[Fe(CN)₆]_{y}•zH₂O selon une structure cubique ; et
dans lequel le séchage du AₓMn[Fe(CN)₆]_{y}•zH₂O précipité dans le four sous vide avec une pression inférieure à 0,1 Torr transforme la structure cristalline du AₓMn[Fe(CN)₆]_{y}•zH₂O d'une structure cubique en la structure rhomboédrique par l'élimination d'eau.

2. Procédé selon la revendication 1, comprenant en outre, avant le mélange des première et deuxième solutions, l'addition d'agents réducteurs à une solution choisie dans l'ensemble constitué par la première solution, la deuxième solution, et à la fois les première et deuxième solutions.

3. Procédé selon la revendication 2, dans lequel l'addition des agents réducteurs comprend l'addition d'agents réducteurs choisis dans l'ensemble constitué par le borohydrure de sodium (NaBH₄), l'hydrazine (N₂H₄) et une combinaison de NaBH₄ et de N₂H₄.

4. Procédé selon la revendication 2, dans lequel l'addition des agents réducteurs comprend l'addition des agents réducteurs à la première solution à une concentration située dans la plage allant de 0 à 100 moles par litre.

5. Procédé selon la revendication 2, dans lequel l'addition des agents réducteurs comprend l'addition des agents réducteurs à la deuxième solution à une concentration de 0 à 100 moles par litre.

6. Procédé selon la revendication 2, comprenant en outre :
la dispersion par ultrasons de matériaux carbonés dans de l'eau distillée, ce qui crée une troisième solution ;
dans lequel le mélange des première et deuxième solutions comprend de plus le mélange de la troisième solution avec une solution choisie dans l'ensemble constitué par la première solution, la deuxième solution, et à la fois les première et deuxième solutions ; et
dans lequel la précipitation de AₓMn[Fe(CN)₆]_{y}•zH₂O comprend la précipitation d'un composite de matériaux carbonés et de AₓMn[Fe(CN)₆]_{y}•zH₂O

7. Procédé selon la revendication 6, dans lequel les matériaux carbonés sont choisis dans l'ensemble constitué par l'oxyde de graphène, l'oxyde de graphène partiellement réduit, le graphène, le noir de carbone, et le graphite.

8. Procédé selon la revendication 7, dans lequel le matériau carboné est l'oxyde de graphène ; lequel procédé comprend en outre l'addition d'un agent réducteur choisi dans l'ensemble constitué par le borohydrure de sodium (NaBH₄), l'hydrazine (N₂H₄) et une combinaison de NaBH₄ et de N₂H₄ au mélange des première, deuxième et troisième solutions.

9. Procédé selon la revendication 1, dans lequel les cations A sont choisis dans l'ensemble constitué par le sodium (Na) et le potassium (K).

10. Procédé selon la revendication 1, dans lequel le séchage du AₓMn[Fe(CN)₆]_{y}•zH₂O précipité dans le four sous vide comprend une température de séchage située dans la plage allant de 20 degrés Celsius à 200 degrés Celsius.
